# EUROPEAN PATENT SPECIFICATION

(11) **EP 3 757 697 B1**
(45) Date of publication and mention of the grant of the patent: **10.08.2022**
(21) Application number: 19183272.4
(22) Date of filing: 28.06.2019
(51) Int. Cl.: G05B 19/12, G05B 19/4099, G05B 19/418

(54) **AN ELECTRONIC DEVICE AND METHOD FOR MANAGING TRACEABILITY OF A CUTTING TOOL**
ELEKTRONISCHE VORRICHTUNG UND VERFAHREN ZUR VERWALTUNG DER VERFOLGBARKEIT EINES SCHNEIDWERKZEUGS
DISPOSITIF ÉLECTRONIQUE ET PROCÉDÉ DE GESTION DE LA TRAÇABILITÉ D'UN OUTIL DE COUPE

(43) Date of publication of application: 30.12.2020
(73) Proprietor: Seco Tools AB, 737 82 Fagersta (SE)
(72) Inventor: Baudin, Micael, 75221 Uppsala (SE); Gravningsbråten, Jan, 73790 Ängelsberg (SE)
(74) Representative: Sandvik

(56) References cited:
- EP-A2- 2 829 366
- WO-A1-2018/169824
- WO-A1-2019/083833
- US-A- 3 543 392
- US-A1- 2014 195 031

## Description

### TECHNICAL FIELD

The disclosure pertains to the field of a manufacturing process of a cutting tool.

### BACKGROUND

A cutting tool may comprise one or more cutting edges that are used for removing chips from a piece of material. Typically a cutting tool is inserted into a cutting tool holder and a machine is e.g. rotating the cutting tool holder together with the cutting tool for processing the piece of material. The piece of material is processed when a cutting edge of the cutting tool comes in contact with the piece of material. A cutting tool may comprise one or more cutting edges that are used for removing chips from the piece of material that is being processed by the cutting tool.

When a cutting tool is manufactured, the cutting tool passes a number of manufacturing steps. In different manufacturing steps, the cutting tool is processed in different ways. Today most operations within different manufacturing process steps when manufacturing cutting tools, are completely disconnected from each other. This means that information from one manufacturing process step is not linked to the cutting tool, and hence not linked to the next manufacturing process step. In the case a problem occurs in a manufacturing process step, the problem is often dealt with at that specific manufacturing process step. However, if a problem occurs with a cutting tool after it has left the manufacturing process, e.g. when the cutting tool is used for processing a piece of material, is can be difficult to understand where in the manufacturing process, in what process step, something went wrong when manufacturing the cutting tool. In the best case, a manual review of manufacturing protocols, may reveal the cause of the problem. However, such manufacturing protocols are sometimes handwritten and it may not always be easy to understand the circumstances at a specific manufacturing process step when the cutting tool was manufactured.

WO 2018/169824 A1 (CARBON INC [US]) 20 September 2018 (2018-09-20) discloses an integrated additive manufacturing system. The system comprising at least one resin supply, a plurality of additive manufacturing machines on which parts may be produced, each of the additive manufacturing machines operatively associated with at least one resin supply, and at least one peripheral machine operatively associated with each of the additive manufacturing machines and the at least one resin supply. The system comprises unique identifiers such as NFC tags, RFID tags and/ or bar codes which can be read by an associated reader device. A build plate (or "window") on which resin is dispensed is provided with a unique identifier. The build plate is transferred with the resin to an additive manufacturing machine. Each part produced on an additive manufacturing machine can also have its own unique identifier. A peripheral machine, e.g. an oven, can be provided with a reader for reading the unique identifiers of the parts and the "window". In this way oven data can be associated with a particular "window" and particular parts in a database. Examples of information that can be stored with the unique identifier are build platform and/or window cassette position identity (i.e. an indication of the specific location on a "window" on which a particular part was produced, particularly useful when multiple parts are concurrently produced at the same time on the same build platform); window cassette unique identity; and date of production.

US 2014/195031 A1 (COUSE STEPHEN [US] ET AL) 10 July 2014 (2014-07-10) discloses systems and methods for fuel cell stack part serialization and tracking. In an embodiment, a barcode may be applied to a fuel cell stack part which may identify the fuel cell stack part. In an embodiment, the barcode may be applied as ink on a green fuel cell stack part prior to sintering. In an embodiment, a portion of a fuel cell stack part may be imaged, and pattern recognition techniques may be utilized to identify the fuel cell stack part based on the unique features of fuel cell stack part. In an embodiment, portion of a fuel cell stack part may be measured to generate one or more series of unique volume/area values and one or more series of unique volume/area values may be utilized to identify the fuel cell stack part.

### SUMMARY

The invention is defined by the device of claim 1, the method of claim 6, and the computer program product of claim 11. Optional aspects of the invention are defined in the dependent claims.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1a and figure 1b illustrates different cutting tools according to some aspects of the disclosure.
Figure 2a and figure 2b illustrates different carriers and an electronic device according to some aspects of the disclosure.
Figure 3a and figure 3b illustrates different process step devices with different placement locations according to some aspects of the disclosure.
Figure 4a illustrates a carrier and an electronic device according to some aspects of the disclosure.
Figure 4b illustrates a process step device and an electronic device according to some aspects of the disclosure.
Figure 5 illustrates a flow chart of the method steps according to some aspects of the disclosure.
Figure 6 illustrates a computer program product according to some aspects of the disclosure.

### DETAILED DESCRIPTION

Aspects of the present disclosure will be described more fully hereinafter with reference to the accompanying drawings. The method and device disclosed herein can, however, be realized in many different forms and should not be construed as being limited to the aspects set forth herein, but by the appended claims. Like numbers in the drawings refer to like elements throughout.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

There is a demand for an easier way to manage traceability of a cutting tool in a manufacturing process of the cutting tool. In particular, the inventors have identified that there is a demand for understanding the specific position and orientation of a specific cutting tool on a specific carrier that is used to carry the cutting tools through a certain process step, or process steps, when manufacturing the cutting tool. Such information from each process step can then be used in the assessment of identifying a reason to a potential problem with a cutting tool at a later stage. The information can also be used as input to a succeeding process step to e.g. adjust parameters of settings in the succeeding process step dependent in the information from the previous process step. Both manufacturers of cutting tools and end-customers of the cutting tools benefit from understanding production information details that are associated with each cutting tool throughout the lifetime of each cutting tool. These details can e.g. help the manufacturer to improve the manufacturing of the cutting tools.

An object of the present disclosure is to provide an electronic device, a method and computer program product which seek to mitigate, alleviate, or eliminate one or more of the above-identified deficiencies in the art and disadvantages singly or in any combination.

The disclosure proposes an electronic device 100, 200, 300 for managing traceability of at least a first cutting tool 20a, 20b, 20c, 20d in a manufacturing process. According to an aspect the at least first cutting tool 20a, 20b, 20c, 20d is at least a first cutting edge 21, 22. According to an aspect the at least first cutting tool 20a, 20b, 20c, 20d is a cutting insert with at least a first cutting edge 21, 22.

According to an aspect, the cutting tool 20a, 20b, 20c, 20d comprising at least a first cutting edge 21, 22 and at least a first identification marker 41, 42 arranged at the first cutting edge 21, 22.

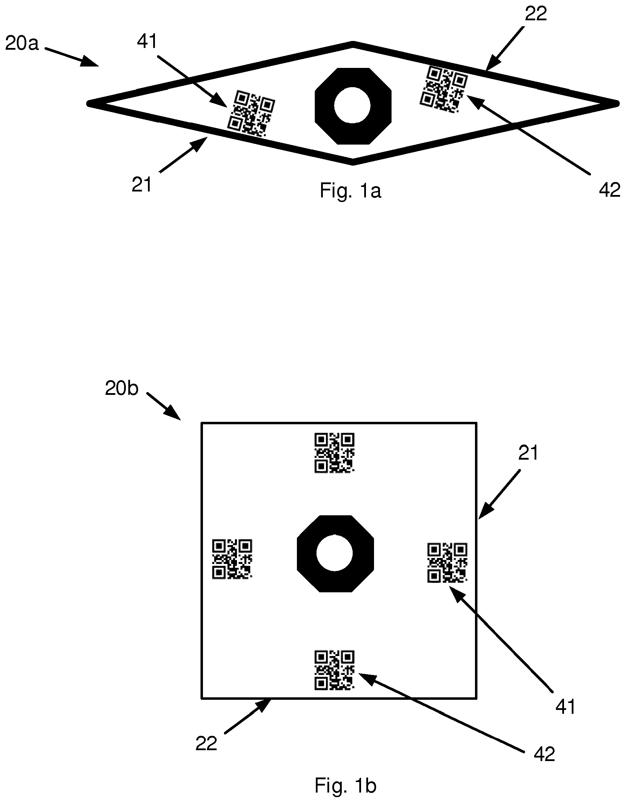

Figure 1a and figure 1b illustrates different cutting tools 20a, 20b according to some aspects of the disclosure. There are different kinds of cutting tools. Examples of cutting tools are cutting inserts, milling cutters, solid end mills, turning tools, drilling tools, boaring heads, reaming tools, thread turning tools, thread milling tools, and thread tapping tools, etc.

According to an aspect, the at least first identification marker 41, 42 is a machine readable code associated with a first cutting tool identification data 1ctID, 2ctID. This means that the at least a first cutting edge 21, 22 can be identified using the at least first cutting tool identification data 1ctID, 2ctID. According to an aspect the at least first cutting tool identification data 1ctID, 2ctID is a unique identity. According to an aspect the at least first cutting tool identification data 1ctID, 2ctID is a number and/or a combination of figures and letters. According to an aspect the at least first cutting tool identification data 1ctID, 2ctID is a serial number.

In the example illustration in figure 1a, the cutting tool 20a comprising a first cutting edge 21 and a first identification marker 41 arranged at the first cutting edge 21. According to an aspect the cutting tool 20a further comprising a second cutting edge 22 and a second identification marker 42 arranged at the second cutting edge 22. This means that the first cutting edge 21 can be identified using the first cutting tool identification data 1ctID and that the second cutting edge 22 can be identified using the second cutting tool identification data 2ctID. In other words the different cutting edges have different identification markers and each cutting edge can be associated with individual cutting tool identification data.

According to an aspect the at least first identification marker 41, 42 is at least any of, or a combination of at least any of, a two dimensional code, a three dimensional code, an image a Quick Response code, a High Capacity Colored Two Dimensional Code, a European Article Number code, a DataMatrix code or a MaxiCode. This means that the at least first identification marker 41, 42 is visually readable on the cutting tool 20a by a machine but also visually detectable by e.g. an operator handling the cutting tool.

According to an aspect the at least first identification marker 41, 42 is an industry standard machine readable code. According to an aspect the at least first identification marker 41, 42 is a company internal machine readable code. According to an aspect the at least first identification marker 41, 42 is an open source machine readable code.

According to an aspect the at least first identification marker 41, 42 is applied using different colours. According to an aspect the at least first identification marker 41, 42 is etched at the cutting tool close to the cutting edge or etched on the surface of the cutting edge.

According to an aspect the association between the machine readable code and the cutting edge information data is defined by a known algorithm for the specific identification marker. According to an aspect cutting edge information data is coded, using a known algorithm for a specific identification marker, which determines the appearance of the identification marker.

The electronic device 100, 200, 300, for managing traceability of at least a first cutting tool 20a, 20b, 20c, 20d in a manufacturing process, comprises a reader device 10a, 10b, 10c configured to read information. According to an aspect the reader device 10a, 10b, 10c comprises at least one of a camera configured to obtain images and/or a radio configured to obtain information via Radio Frequency Identification technology or Near Field Communication technology.

The reader device 10a, 10b, 10c may be a component integrated in an electronic device 100, 200, 300 or a stand-alone component. According to an aspect the electronic device 100, 200, 300 is configured to be connected with the reader device 10a, 10b, 10c. According to an aspect the electronic device 100, 200, 300 is configured to be connected to a communication network 50.

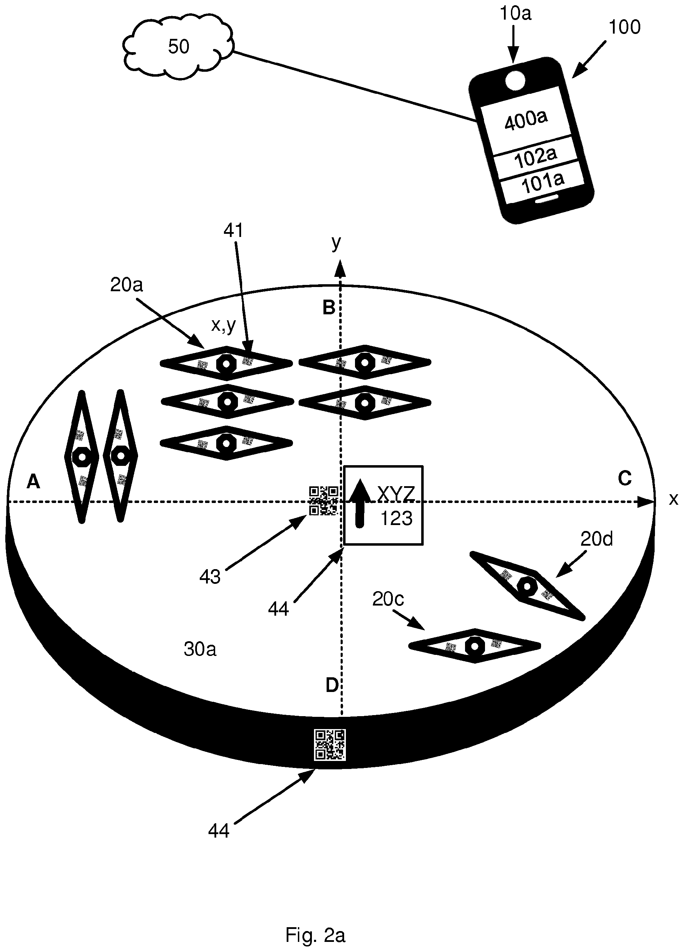

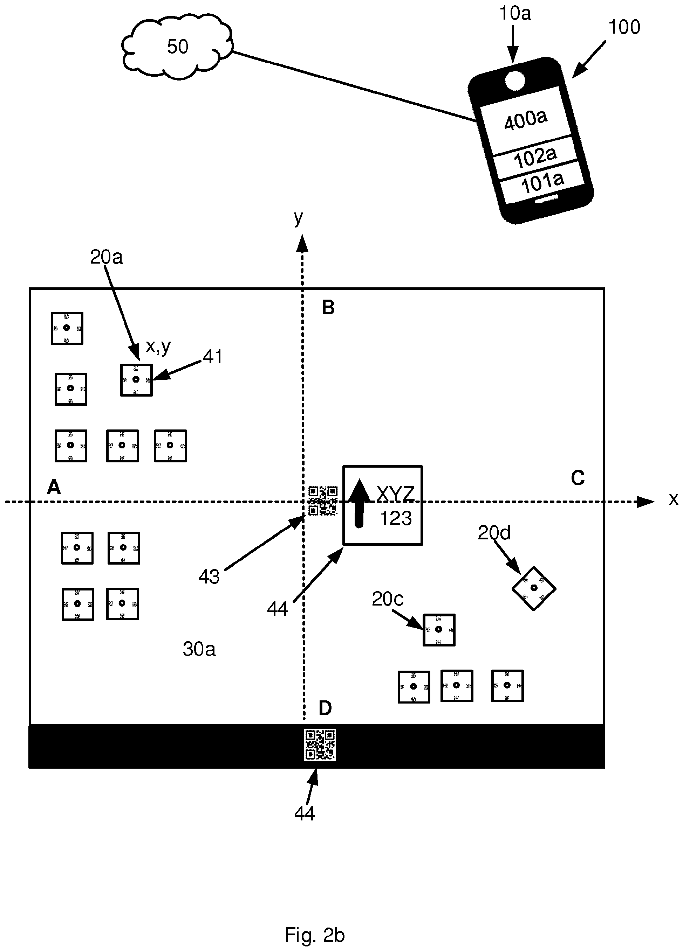

Figure 2a and figure 2b illustrates an electronic device 100 in form of a smartphone, tablet, cellular phone, feature phone or any portable electronic device. In one example, as illustrated in figure 2a and in figure 2b, the reader device 10a is the camera of a smartphone.

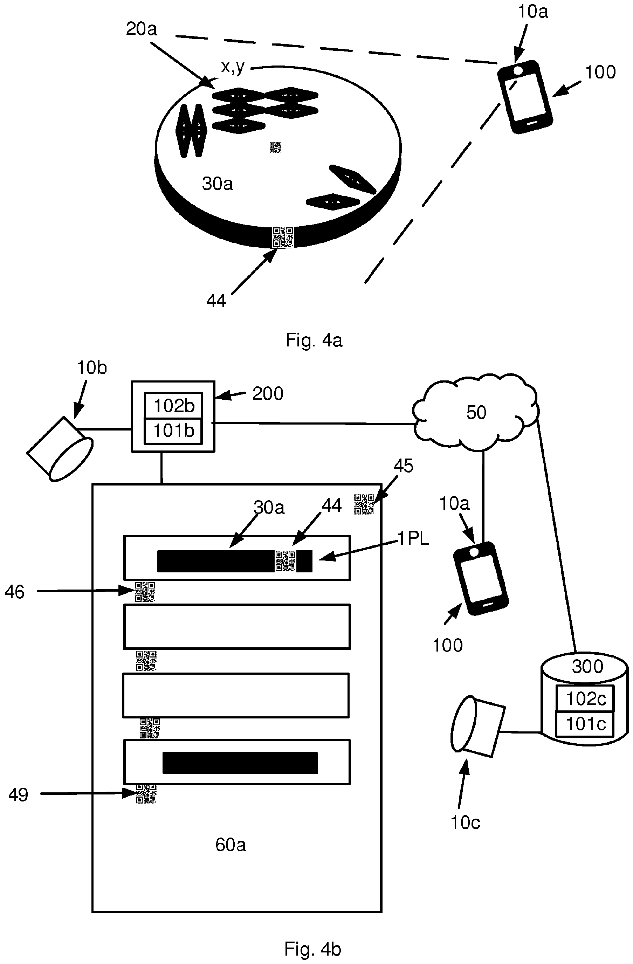

In an example the electronic device 200 is a part of a process step device 60a as illustrated in figure 4b. In an example, illustrated in figure 4b, the reader device 10b is a stand-alone reader device connected to the electronic device 200 and installed as a part of the process step device 60a. According to an aspect the electronic device is a remote server 300 connected to a reader device 10c via a communication network 50 as illustrated in figure 4b.

According to an aspect the electronic device 100, 200, 300 further comprising a memory 101a, 101b, 101c. According to an aspect one electronic device 100, 200, 300 is configured to be connected to another electronic device 100, 200, 300 via a communication network 50 as illustrated in figure 4b.

In one example the communication network 50, as illustrated in figure 2a, figure 2b and figure 4b, is a standardized wireless local area network such as a Wireless Local Area Network, WLAN, Bluetooth^{™}, ZigBee, Ultra-Wideband, Near Field Communication, NFC, Radio Frequency Identification, RFID, or similar network. In one example the communication network 50 is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. The communication network 50 can also be a combination of both a local area network and a wide area network. The communication network 50 can also be a wired network. According to an aspect the communication network 50 is defined by common Internet Protocols.

According to an aspect the electronic device 100, 200, 300 is configured to be connected to a memory 101a, 101b, 101c in another electronic device 100, 200, 300 via the communication network 50.

The electronic device 100, 200, 300 further comprises a processing circuitry 102a, 102b, 102c operatively connected to the reader device 10a, 10b, 10c.

According to an aspect the processing circuitry 102a, 102b, 102c is configured to cause the electronic device 100, 200, 300 to detect, by the reader device 10a, 10b, 10c, an identification marker 41, 42 arranged at a cutting edge 21,22 of the at least first cutting tool 20a, 20b, 20c, 20d.

The processing circuitry 102a, 102b, 102c is configured to cause the electronic device 100, 200, 300 to obtain, by the reader device 10a, 10b, 10c, information related to a first cutting tool identification marker 41, 42 of the at least first cutting tool 20a, 20b, 20c, 20d, and decode the at least first cutting tool identification marker 41, 42 to determine at least first cutting tool identification data 1ctID, 2ctID. According to an aspect, as visualized in figure 1a, the cutting tool 20a has two cutting edges 21, 22, and each cutting edge of the cutting tool 20a is associated with a cutting tool identification marker 41, 42 that can be decoded to determine a first cutting tool identification data 1ctID and a second cutting tool identification data 2ctID. In other words, in this example the same cutting tool 20a is associated with a first cutting tool identification data 1ctID and a second cutting tool identification data 2ctID.

The processing circuitry 102a, 102b, 102c is further configured to cause the electronic device 100, 200, 300 to obtain, by the reader device 10a, 10b, 10c, information related to a first carrier identification marker 43, 44 of at least a first carrier 30a, 30b configured to carry the at least first cutting tool 20a, 20b, 20c, 20d in the manufacturing process, and decode the at least first carrier identification marker 43, 44 to determine at least first carrier identification data 1cID, 2cID. The processing circuitry 102a, 102b, 102c is further configured to cause the electronic device 100, 200, 300 to generate a first association data 1AD indicative of the at least first cutting tool identification data 1ctID, 2ctID and the at least first carrier identification data 1cID, 2cID. According to an aspect the first association data 1AD further comprising time information data. In an example the first association data 1AD is time stamped at a first point of time and further time stamped at a second point of time. In other words a certain time or a certain time period can be associated with the first association data 1AD. According to an aspect the first association data 1AD is stored in a memory 101a, 101b, 101c. An advantage with the first association data 1AD is that the at least first cutting tool 20a, 20b, 20c, 20d, associated with the at least first cutting tool identification data 1ctID, 2ctID, can be traced to be associated with the at least first carrier 30a, 30b. This means for example that a certain cutting tool 20a can be traced to be associated with a certain carrier 30a at a certain point of time.

Figure 4a illustrates an example electronic device 100 that is obtaining, by the reader device 10a, information related to a carrier identification marker 44 of the carrier 30a and information related to a first cutting tool identification marker of the at least first cutting tool 20a.

According to an aspect the reader device 10a, 10b, 10c is any of a camera based reader, a video camera reader, a pen-type reader with photodiodes, a laser scanner, a charge-coupled device, CCD, reader or a cell phone camera. In figure 4a, the example reader device 10a of the electronic device 100 is a cell phone camera.

According to an aspect the reader device 10a, 10b, 10c is a camera configured to obtain images. According to an aspect the electronic device further comprises a camera configured to obtain images. The processing circuitry 102a, 102b, 102c is further configured to cause the electronic device 100, 200, 300 to obtain an image of the at least first carrier 30a, 30b and the at least first cutting tool 20a, 20b, 20c, 20d. The processing circuitry 102a, 102b, 102c is further configured to determine, by image processing, at least a first position data 1PD, 2PD of the at least first cutting tool 20a, 20b, 20c, 20d in relation to the at least first carrier 30a, 30b, for determining the position of the at least first cutting tool 20a, 20b, 20c, 20d on the at least first carrier 30a, 30b and generate a second association data 2AD indicative of the at least first cutting tool identification data 1ctID, 2ctID and the at least first position data 1PD, 2PD.

According to an aspect, the processing circuitry 102a, 102b, 102c is further configured to determine, by image processing, at least a first position data 1PD, 2PD of at least a first cutting edge 21, 22 of the at least first cutting tool 20a, 20b, 20c, 20d in relation to the at least first carrier 30a, 30b, for determining the position of the at least at least first cutting edge 21, 22 of the at least first cutting tool 20a, 20b, 20c, 20d on the at least first carrier 30a, 30b and generate a second association data 2AD indicative of the at least first cutting tool identification data 1ctID, 2ctID and the at least first position data 1PD, 2PD.

An advantage with the second association data 2AD is that the at least first cutting tool 20a, 20b, 20c, 20d, associated with the at least first cutting tool identification data 1ctID, 2ctID, can be traced to be associated with a position on the at least first carrier 30a, 30b so that it can be determined where on the at least first carrier 30a, 30b the at least first cutting tool 20a, 20b, 20c, 20d has been placed. According to an aspect the second association data 2AD is stored in a memory 101a, 101b, 101c. According to an aspect the second association data 2AD further comprising time information data. In an example the second association data 2AD is time stamped at a first point of time and further time stamped at a second point of time. In other words a certain time or a certain time period can be associated with the second association data 2AD.

According to an aspect the image of the at least first carrier 30a, 30b further comprising placement information for determining a relative position of the at least first cutting tool 20a, 20b, 20c, 20d on the at least first carrier 30a, 30b. In figure 2a and figure 2b, placement information is illustrated with the letters A, B, C, and D on the carrier 30a. In the example the letters A, B , C and D may be any information such as letters, figures, icons, drawings or lines that enables a relative placement information of the at least first carrier 30a, 30b.

According to an aspect the at least first position data 1PD, 2PD is a two dimensional coordinate x,y for determining the position of the at least first cutting tool 20a, 20b, 20c, 20d on the at least first carrier 30a, 30b.

According to an aspect, as illustrated in figure 2a and figure 2b, a virtual two dimensional plane x,y is used for determining the position of the at least first cutting tool 20a, 20b, 20c, 20d on the at least first carrier 30a, 30b. According to an aspect the virtual two dimensional plane is determined based on placement information on the at least first carrier 30a, 30b. In an example, as visualised in figure 2a and figure 2b, a line between the placement information A and the placement information C forms a x-axis. In an example, as visualised in figure 2a and figure 2b, a line between the placement information D and the placement information B forms a y-axis. In an example as visualised in figure 2a and figure 2b, the cutting tool 20a is positioned at the position x,y on the carrier 30a. In an example the virtual two dimensional plane is only displayed via a user interface 400a the electronic device 100.

According to an aspect, the first carrier identification marker 43, 44 further comprising a direction indication for indicating a relative direction of the at least first carrier 30a, 30b. According to an aspect when decoding the at least first carrier identification marker 43, 44, to determine at least first carrier identification data 1cID, 2clD, a placement information can also be determined. In an example such decoded placement information may be a direction. In an example a direction can be used to define a two dimensional plane. In the figure 2a, the carrier identification marker 44 is illustrated together with an arrow. The arrow in the identification marker 44 can in an example be a visible arrow, readable by a human eye. In an example the arrow in the identification marker 44 is not visible to the human eye but only readable by the reader device 10a, 10b, 10c. In an example the arrow is only displayed via a user interface 400a the electronic device 100.

According to an aspect the processing circuitry 102a, 102b, 102c is further configured to cause the electronic device 100, 200, 300 to obtain an image of the at least first carrier 30a, 30b and the at least first cutting tool 20a, 20b, 20c, 20d and determine, by image processing, at least a first orientation data 1OD, 2OD of the at least first cutting tool 20a, 20b, 20c, 20d in relation to the at least first carrier 30a, 30b, for determining the orientation of the at least first cutting tool 20a, 20b, 20c, 20d on the at least first carrier 30a, 30b and generate a third association data 3AD indicative of the at least first cutting tool identification data 1ctID, 2ctID and the at least first orientation data 1OD, 2OD.

According to an aspect the processing circuitry 102a, 102b, 102c is further configured to cause the electronic device 100, 200, 300 to obtain an image of the at least first carrier 30a, 30b and the at least first cutting edge 21, 22 of the at least first cutting tool 20a, 20b, 20c, 20d and determine, by image processing, at least a first orientation data 1OD, 2OD of the at least first cutting edge 21, 22 of the at least first cutting tool 20a, 20b, 20c, 20d in relation to the at least first carrier 30a, 30b, for determining the orientation of the at least first cutting edge 21, 22 of the at least first cutting tool 20a, 20b, 20c, 20d on the at least first carrier 30a, 30b and generate a third association data 3AD indicative of the at least first cutting tool identification data 1ctID, 2ctID and the at least first orientation data 1OD, 2OD.

According to an aspect the third association data 3AD is further based on the at least first carrier identification data 1cID, 2cID.

According to an aspect the third association data 3AD further comprising time information data. In an example the third association data 3AD is time stamped at a first point of time and further time stamped at a second point of time. In other words a certain time or a certain time period can be associated with the third association data 3AD. According to an aspect the third association data 3AD is stored in a memory 101a, 101b, 101c. An advantage with the third association data 3AD is that the at least first cutting tool 20a, 20b, 20c, 20d, associated with the at least first cutting tool identification data 1ctID, 2ctID, can be traced to be associated with an orientation on the at least first carrier 30a, 30b so that it can be determined how the at least first cutting tool 20a, 20b, 20c, 20d has been oriented on the at least first carrier 30a, 30b.

In the example as visualised in figure 2a, a plurality of cutting tools 20a, 20b, 20c, 20d are placed on the carrier 30a having different orientations. According to an aspect the orientation can be determined to be at least one of a horizontal orientation and a vertical orientation. In the example illustrated in figure 2a a plural cutting tools are placed in a horizontal orientation, e.g. the cutting tool 20a, and a plural cutting tools are placed in a vertical orientation. In the figure 2a the cutting tool 20d is orientated with a certain angle in relation to the carrier 30a.

According to an aspect the orientation data 1OD, 2OD is defined by a rotation angle of the at least first cutting tool 20a, 20b, 20c, 20d in relation to the at least first carrier 30a, 30b. According to an aspect the orientation of the at least first cutting tool 20a, 20b, 20c, 20d is determined to be a number of degrees in relation to the relative placement information of the at least first carrier 30a, 30b.

According to an aspect, the virtual two dimensional plane x,y is used for determining the orientation of the at least first cutting tool 20a, 20b, 20c, 20d on the at least first carrier 30a, 30b. According to an aspect the orientation data 1OD, 2OD is defined by a rotation angle of the at least first cutting tool 20a, 20b, 20c, 20d around any of the x-axis or the y-axis that defines the two dimensional plane x, y of the surface of the at least first carrier 30a, 30b.

According to an aspect the orientation data 1OD, 2OD is further defined by a rotation angle of the at least first cutting tool 20a, 20b, 20c, 20d around an axis z that perpendicular to the x-axis and the y-axis that defines the two dimensional plane x, y of the surface of the at least first carrier 30a, 30b.

According to an aspect the processing circuitry 102a, 102b, 102c is further configured to cause the electronic device 100, 200, 300 to obtain an image of the at least first carrier 30a, 30b and at least a first process step device 60a, 60b comprising at least a first placement location 1PL, 2PL, 3PL, 4PL configured to receive the at least first carrier 30a, 30b. The processing circuitry 102a, 102b, 102c is further configured to cause the electronic device 100, 200, 300 to determine, by image processing, at least a first placement location data 1PLD, 2PLD, 3PLD, 4PLD of the at least first carrier 30a, 30b carrying the at least first cutting tool 20a, 20b, 20c, 20d in relation to the least first placement location 1PL, 2PL, 3PL, 4PL where the at least first carrier 30a, 30b is placed, for determining the placement of the at least first carrier 30a, 30b in the at least first process step device 60a, 60b and generate a fourth association data 4AD indicative of the at least first cutting tool identification data 1ctID, 2ctID and the at least first placement location data 1PLD, 2PLD, 3PLD, 4PLD.

According to an aspect the fourth association data 4AD is stored in a memory 101a, 101b, 101c According to an aspect the fourth association data 4AD further comprising time information data. In an example the fourth association data 4AD is time stamped at a first point of time and further time stamped at a second point of time. In other words a certain time or a certain time period can be associated with the fourth association data 4AD. An advantage with the fourth association data 4AD is that the at least first carrier 30a, 30b, that is carrying the at least first cutting tool 20a, 20b, 20c, 20d associated with the at least first cutting tool identification data 1ctID, 2ctID, can further be traced to be associated with at least a first placement location data 1PLD, 2PLD, 3PLD, 4PLD for determining the placement of the at least first carrier 30a, 30b in the at least first process step device 60a, 60b.

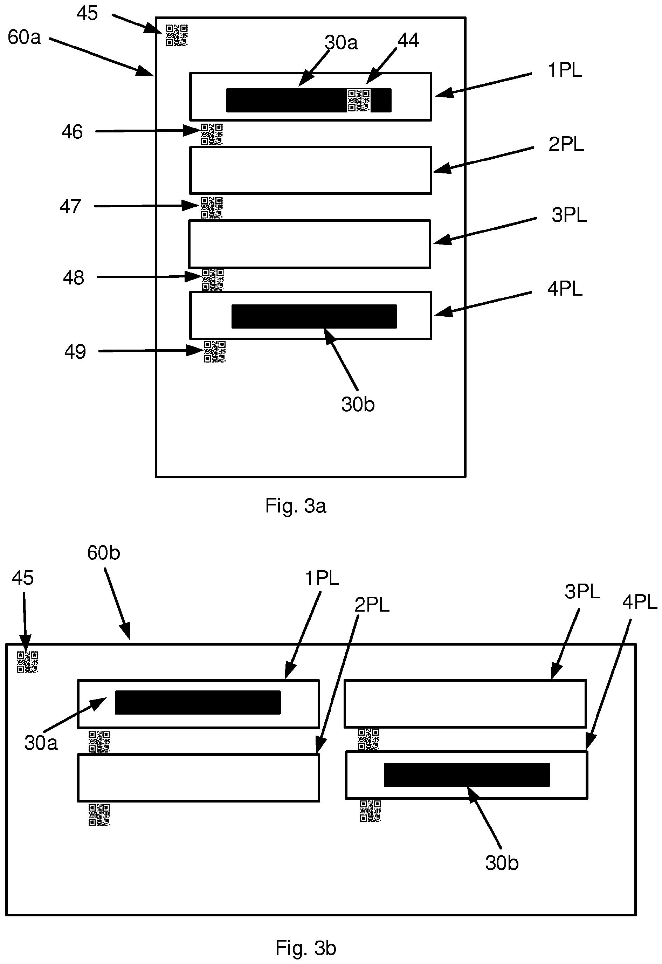

Figure 3a and figure 3b illustrate two example process step devices 60a, 60b. In an example the process step device 60a, 60b is an oven. In an example the process step device 60a, 60b is used for sintering the at least first cutting tool 20a, 20b, 20c, 20d. In an example the process step device 60a, 60b is used for coating the at least first cutting tool 20a, 20b, 20c, 20d.

According to an aspect the at least a first placement location data 1PLD, 2PLD, 3PLD, 4PLD is obtained by decoding an image of at least a first placement location identification marker 46, 47, 48, 49 of at the least first placement location 1PL, 2PL, 3PL, 4PL, obtained by the reader device 10a, 10b, 10c. In the example in figure 3a and figure 3b, each placement location 1PL, 2PL, 3PL, 4PL is associated with a placement location identification marker 46, 47, 48, 49.

Figure 4a illustrates an example electronic device 100 that is obtaining, by the reader device 10a, information related to a carrier identification marker 44 of the carrier 30a and information related to a first cutting tool identification marker of the at least first cutting tool 20a. In figure 4b the example electronic device 100 is then further obtaining a placement location data of the carrier 30a by decoding the image of the placement location identification marker 46 and by decoding the image of the carrier identification marker 44 of the carrier 30a when placed at the first placement location 1PL. In the example in figure 4b, the carrier 30a is associated with the first placement location data 1PLD for determining the placement of the carrier 30a at the first placement location 1PL in the at least first process step device 60a.

According to an aspect the processing circuitry 102a, 102b, 102c is further configured to cause the electronic device 100, 200, 300 to obtain at least a first process step identification data 1psID, 2psID and generate a fifth association data 5AD indicative of the at least first cutting tool identification data 1ctID, 2ctID and the at least first process step identification data 1psID, 2psID. According to an aspect the fifth association data 5AD is stored in a memory 101a, 101b, 101c. According to an aspect the fifth association data 5AD further comprising time information data. In an example the fifth association data 5AD is time stamped at a first point of time and further time stamped at a second point of time. In other words a certain time or a certain time period can be associated with the fifth association data 5AD. An advantage with the fifth association data 5AD is that the at least first cutting tool 20a, 20b, 20c, 20d, associated with the at least first cutting tool identification data 1ctID, 2ctID, can be traced to be associated with the at least first process step by the at least first process step identification data 1psID, 2psID.

According to an aspect the at least first process step identification data 1psID, 2psID is obtained by decoding an image of at least a first process step identification marker 45 of at least a first process step device 60a, 60b, obtained by the reader device 10a, 10b, 10c.

According to an aspect the at least first carrier identification marker 43, 44, at least a first process step identification marker 45, and the at least first placement location identification marker 46, 47, 48, 49 is at least any of, or a combination of at least any of, a two dimensional code, a three dimensional code, an image a Quick Response code, a High Capacity Colored Two Dimensional Code, a European Article Number code, a DataMatrix code or a MaxiCode.

According to an aspect the least first process step identification data 1psID, 2psID is obtained by input of the least a first process step identification data 1psID, 2psID by an operator via a user interface 400a of the electronic device 100, 200, 300.

According to an aspect the processing circuitry 102a, 102b, 102c is further configured to cause the electronic device 100, 200, 300 to obtain at least a first process step sensor data 1pssD, 2pssD and generate a sixth association data 6AD indicative of the at least first cutting tool identification data 1ctID, 2ctID and the at least first process step sensor data 1pssD, 2pssD.

According to an aspect the at least first process step sensor data 1pssD, 2pssD is obtained by at least a first sensor associated with at least a first process step device 60a, 60b and sent to the electronic device 100, 200, 300. In an example the at least first process step sensor data 1pssD, 2pssD is any of a temperature data, a pressure data, a particle density data or a gas data. According to an aspect the sixth association data 6AD further comprising time information data. In an example the sixth association data 6AD is time stamped at a first point of time and further time stamped at a second point of time. In other words a certain time or a certain time period can be associated with the sixth association data 6AD. According to an aspect the sixth association data 6AD is stored in a memory 101a, 101b, 101c.

An advantage with the sixth association data 6AD is that the at least first cutting tool 20a, 20b, 20c, 20d, associated with the at least first cutting tool identification data 1ctID, 2ctID, can be traced to be associated with the least a first process step sensor data 1pssD, 2pssD, to e.g. understand under what circumstances the at least first cutting tool 20a, 20b, 20c, 20d has been processed.

According to an aspect the processing circuitry 102a, 102b, 102c is further configured to cause the electronic device 100, 200, 300 to store the at least first association data 1AD, 2AD, 3AD, 4AD, 5AD, 6AD in a memory 101a, 101b, 101c operatively connected to the electronic device 100, 200, 300 and obtain the at least first association data 1AD, 2AD, 3AD, 4AD, 5AD, 6AD from the memory 101a, 101b, 101c by obtaining, by the reader device 10a, 10b, 10c, information related to the at least first identification marker 41, 42 of the at least first cutting tool 20a, 20b, 20c, 20d and decoding the at least first cutting tool identification marker 41, 42 to determine at least first cutting tool identification data 1ctID, 2ctID. This means among others that by having access to the at least first cutting tool 20a, 20b, 20c, 20d, the reader device 10a, 10b, 10c can be used to obtain the at least first association data 1AD, 2AD, 3AD, 4AD, 5AD, 6AD from the memory 101a, 101b, 101c in order to trace a plurality of data associated with the at least first cutting tool 20a, 20b, 20c, 20d during the manufacturing process. According to an aspect any of the at least first association data 1AD, 2AD, 3AD, 4AD, 5AD, 6AD can be obtained from the memory 101a, 101b, 101c by a request from a user via a user interface 400a of the electronic device 100, 200, 300. In an example the request from a user comprising at least a first cutting tool identification data 1ctID, 2ctID.

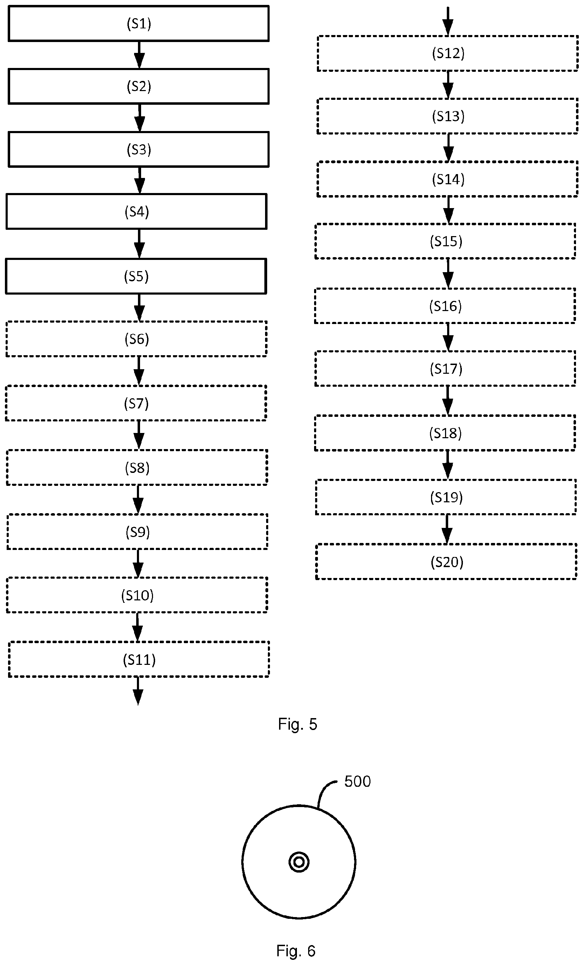

The disclosure further proposes a method for managing traceability of at least a first cutting tool 20a, 20b, 20c, 20d in a manufacturing process. Figure 5 illustrates a flow chart of the method steps according to some aspects of the disclosure.

The method comprising the step of S1 obtaining, by a reader device 10a, 10b, 10c of an electronic device 100, 200, 300, information related to at least a first identification marker 41, 42 of the at least first cutting tool 20a, 20b, 20c, 20d and the step of S2 decoding the at least first cutting tool identification marker 41, 42 to determine at least first cutting tool identification data 1ctID, 2ctID. The method further comprising the step of S3 obtaining, by the reader device 10a, 10b, 10c, information related to at least a first carrier identification marker 43, 44 of at least a first carrier 30a, 30b configured to carry the at least first cutting tool 20a, 20b, 20c, 20d in the manufacturing process and the step of S4 decoding the at least first carrier identification marker 43, 44 to determine at least first carrier identification data 1cID, 2cID. The method further comprising the step of S5 generating a first association data 1AD indicative of the at least first cutting tool identification data 1ctID, 2ctID and the at least first carrier identification data 1cID, 2cID. An advantage with the first association data 1AD is that the at least first cutting tool 20a, 20b, 20c, 20d, associated with the at least first cutting tool identification data 1ctID, 2ctID, can be traced to be associated with the at least first carrier 30a, 30b. This means for example that a certain cutting tool 20a can be traced to be associated with a certain carrier 30a at a certain point of time.

According to an aspect the method further comprising the step of S6 obtaining an image, of a camera configured to obtain images, of the at least first carrier 30a, 30b and the at least first cutting tool 20a, 20b, 20c, 20d and the step of S7 determining, by image processing, at least a first position data 1PD, 2PD of the at least first cutting tool 20a, 20b, 20c, 20d in relation to the at least first carrier 30a, 30b, for determining the position of the at least first cutting tool 20a, 20b, 20c, 20d on the at least first carrier 30a, 30b. The method further comprising the step of S8 generating a second association data 2AD indicative of the at least first cutting tool identification data 1ctID, 2ctID and the at least first position data 1PD, 2PD. An advantage with the second association data 2AD is that the at least first cutting tool 20a, 20b, 20c, 20d, associated with the at least first cutting tool identification data 1ctID, 2ctID, can be traced to be associated with a position on the at least first carrier 30a, 30b so that it can be determined where on the at least first carrier 30a, 30b the at least first cutting tool 20a, 20b, 20c, 20d has been placed.

According to an aspect the method further comprising the step of S9 obtaining an image, of the camera configured to obtain images, of the at least first carrier 30a, 30b and the at least first cutting tool 20a, 20b, 20c, 20d and the step of S10 determining, by image processing, at least a first orientation data 1OD, 2OD of the at least first cutting tool 20a, 20b, 20c, 20d in relation to the at least first carrier 30a, 30b, for determining the orientation of the at least first cutting tool 20a, 20b, 20c, 20d on the at least first carrier 30a, 30b. The method further comprising the step of S11 generating a third association data 3AD indicative of the at least first cutting tool identification data 1ctID, 2ctID and the at least first orientation data 1OD, 2OD. An advantage with the third association data 3AD is that the at least first cutting tool 20a, 20b, 20c, 20d, associated with the at least first cutting tool identification data 1ctID, 2ctID, can be traced to be associated with an orientation on the at least first carrier 30a, 30b so that it can be determined how the at least first cutting tool 20a, 20b, 20c, 20d has been oriented on the at least first carrier 30a, 30b.

According to an aspect the method further comprising the step of S12 obtaining an image, of the camera configured to obtain images, of the at least first carrier 30a, 30b and at least a first process step device 60a, 60b comprising at least a first placement location 1PL, 2PL, 3PL, 4PL configured to receive the at least first carrier 30a, 30b. The method further comprising the step of S13 determining, by image processing, at least a first placement location data 1PLD, 2PLD, 3PLD, 4PLD of the at least first carrier 30a, 30b carrying the at least first cutting tool 20a, 20b, 20c, 20d in relation to the least first placement location 1PL, 2PL, 3PL, 4PL where the at least first carrier 30a, 30b is placed, for determining the placement of the at least first carrier 30a, 30b in the at least first process step device 60a, 60b. The method then further comprising the step of S14 generating a fourth association data 4AD indicative of the at least first cutting tool identification data 1ctID, 2ctID and the at least first placement location data 1PLD, 2PLD, 3PLD, 4PLD. An advantage with the fourth association data 4AD is that the at least first carrier 30a, 30b, that is carrying the at least first cutting tool 20a, 20b, 20c, 20d associated with the at least first cutting tool identification data 1ctID, 2ctID, can further be traced to be associated with at least a first placement location data 1PLD, 2PLD, 3PLD, 4PLD for determining the placement of the at least first carrier 30a, 30b in the at least first process step device 60a, 60b.

According to an aspect the method further comprising the step of S15 obtaining at least a first process step identification data 1psID, 2psID and the step of S16 generating a fifth association data 5AD indicative of the at least first cutting tool identification data 1ctID, 2ctID and the at least first process step identification data 1psID, 2psID. An advantage with the fifth association data 5AD is that the at least first cutting tool 20a, 20b, 20c, 20d, associated with the at least first cutting tool identification data 1ctID, 2ctID, can be traced to be associated with the at least first process step by the at least first process step identification data 1psID, 2psID.

According to an aspect the method further comprising the step of S17 obtaining at least a first process step sensor data 1pssD, 2pssD and the step of S18 generating a sixth association data 6AD indicative of the at least first cutting tool identification data 1ctID, 2ctID and the at least first process step sensor data 1pssD, 2pssD. An advantage with the sixth association data 6AD is that the at least first cutting tool 20a, 20b, 20c, 20d, associated with the at least first cutting tool identification data 1ctID, 2ctID, can be traced to be associated with the least a first process step sensor data 1pssD, 2pssD, to e.g. understand under what circumstances the at least first cutting tool 20a, 20b, 20c, 20d has been processed.

According to an aspect the method further comprising the step of S19 storing the at least first association data 1AD, 2AD, 3AD, 4AD, 5AD, 6AD in a memory 101a, 101b, 101c operatively connected to the electronic device 100, 200, 300 and the step of S20 obtaining the at least first association data 1AD, 2AD, 3AD, 4AD, 5AD, 6AD from the memory 101a, 101b, 101c by obtaining, by the reader device 10a, 10b, 10c, information related to the at least first identification marker 41, 42 of the at least first cutting tool 20a, 20b, 20c, 20d and decoding the at least first cutting tool identification marker 41, 42 to determine at least first cutting tool identification data 1ctID, 2ctID. This means among others that by having access to the at least first cutting tool 20a, 20b, 20c, 20d, the reader device 10a, 10b, 10c can be used to obtain the at least first association data 1AD, 2AD, 3AD, 4AD, 5AD, 6AD from the memory 101a, 101b, 101c in order to trace a plurality of data associated with the at least first cutting tool 20a, 20b, 20c, 20d during the manufacturing process.

The disclosure further proposes, as illustrated in figure 6, a computer program product 500 comprising a non-transitory computer readable medium, having thereon a computer program comprising program instructions, the computer program being loadable into a processing circuitry 102a, 102b, 102c and configured to cause execution of the method, and any aspect of the method, when the computer program is run by the processing circuitry 102a, 102b, 102c.

According to an aspect the electronic device 100, 200, 300 is configured to carry out any or more of the aspects of the described method. According to an aspect of the disclosure, the method is carried out by instructions in a software program that is downloaded and run in the electronic device 100, 200, 300.

In the drawings and specification, there have been disclosed exemplary embodiments. However, many variations and modifications can be made to these embodiments, within the scope of the appended claims. Accordingly, although specific terms are employed, they are used in a generic and descriptive sense only and not for purposes of limitation, the scope of the embodiments being defined by the following claims.

## Claims

1. An electronic device (100, 200, 300) for managing traceability of at least a first cutting tool (20a, 20b, 20c, 20d) in a manufacturing process of said tool, the electronic device (100, 200, 300) comprises:
• a reader device (10a, 10b, 10c) configured to read information;
• a processing circuitry (102a, 102b, 102c) operatively connected to the reader device (10a, 10b, 10c) configured to cause the electronic device (100, 200, 300) to:
- obtain, by the reader device (10a, 10b, 10c), information related to a first cutting tool identification marker (41, 42) of the at least first cutting tool (20a, 20b, 20c, 20d);
- decode the at least first cutting tool identification marker (41, 42) to determine at least first cutting tool identification data (1ctID, 2ctID);
- obtain, by the reader device (10a, 10b, 10c), information related to a first carrier identification marker (43, 44) of at least a first carrier (30a, 30b) configured to carry the at least first cutting tool (20a, 20b, 20c, 20d) in the manufacturing process;
- decode the at least first carrier identification marker (43, 44) to determine at least first carrier identification data (1cID, 2cID); and
- generate a first association data (1AD) indicative of the at least first cutting tool identification data (1ctID, 2ctID) and the at least first carrier identification data (1cID, 2cID); wherein
the reader device (10a, 10b, 10c) is a camera configured to obtain images, or wherein the electronic device further comprises a camera configured to obtain images, and the processing circuitry (102a, 102b, 102c) is further configured to cause the electronic device (100, 200, 300) to:
- obtain an image of the at least first carrier (30a, 30b) and the at least first cutting tool (20a, 20b, 20c, 20d);
- determine, by image processing, at least a first position data (1PD, 2PD) of the at least first cutting tool (20a, 20b, 20c, 20d) in relation to the at least first carrier (30a, 30b), for determining the position of the at least first cutting tool (20a, 20b, 20c, 20d) on the at least first carrier (30a, 30b); and
- generate a second association data (2AD) indicative of the at least first cutting tool identification data (1ctID, 2ctID) and the at least first position data (1PD, 2PD); **characterized in that**
the processing circuitry (102a, 102b, 102c) is further configured to cause the electronic device (100, 200, 300) to:
- obtain an image of the at least first carrier (30a, 30b) and at least a first process step device (60a, 60b) comprising at least a first placement location (1PL, 2PL, 3PL, 4PL) configured to receive the at least first carrier (30a, 30b);
- determine, by image processing, at least a first placement location data (1PLD, 2PLD, 3PLD, 4PLD) of the at least first carrier (30a, 30b) carrying the at least first cutting tool (20a, 20b, 20c, 20d) in relation to the at least first placement location (1PL, 2PL, 3PL, 4PL) where the at least first carrier (30a, 30b) is placed, for determining the placement of the at least first carrier (30a, 30b) in the at least first process step device (60a, 60b); and
- generate a fourth association data (4AD) indicative of the at least first cutting tool identification data (1ctID, 2ctID) and the at least first placement location data (1PLD, 2PLD, 3PLD, 4PLD).

2. The electronic device (100, 200, 300) according to claim 1, wherein the processing circuitry (102a, 102b, 102c) is further configured to cause the electronic device (100, 200, 300) to:
- obtain an image of the at least first carrier (30a, 30b) and the at least first cutting tool (20a, 20b, 20c, 20d);
- determine, by image processing, at least a first orientation data (1OD, 2OD) of the at least first cutting tool (20a, 20b, 20c, 20d) in relation to the at least first carrier (30a, 30b), for determining the orientation of the at least first cutting tool (20a, 20b, 20c, 20d) on the at least first carrier (30a, 30b); and
- generate a third association data (3AD) indicative of the at least first cutting tool identification data (1ctID, 2ctID) and the at least first orientation data (1OD, 20D).

3. The electronic device (100, 200, 300) according to any of the preceding claims, wherein the processing circuitry (102a, 102b, 102c) is further configured to cause the electronic device (100, 200, 300) to:
- obtain at least a first process step identification data (1psID, 2psID); and
- generate a fifth association data (5AD) indicative of the at least first cutting tool identification data (1ctID, 2ctID) and the at least first process step identification data (1psID, 2psID).

4. The electronic device (100, 200, 300) according to any of the preceding claims, wherein the processing circuitry (102a, 102b, 102c) is further configured to cause the electronic device (100, 200, 300) to:
- obtain at least a first process step sensor data (1pssD, 2pssD); and
- generate a sixth association data (6AD) indicative of the at least first cutting tool identification data (1ctID, 2ctID) and the at least first process step sensor data (1pssD, 2pssD).

5. The electronic device (100, 200, 300) according to any of the preceding claims, wherein the processing circuitry (102a, 102b, 102c) is further configured to cause the electronic device (100, 200, 300) to:
- store the at least first association data (1AD, 2AD, 3AD, 4AD, 5AD, 6AD) in a memory (101a, 101b, 101c) operatively connected to the electronic device (100, 200, 300); and
- obtain the at least first association data (1AD, 2AD, 3AD, 4AD, 5AD, 6AD) from the memory (101a, 101b, 101c) by obtaining, by the reader device (10a, 10b, 10c), information related to the at least first identification marker (41, 42) of the at least first cutting tool (20a, 20b, 20c, 20d) and decoding the at least first cutting tool identification marker (41, 42) to determine at least first cutting tool identification data (1ctID, 2ctID).

6. A method for managing traceability of at least a first cutting tool (20a, 20b, 20c, 20d) in a manufacturing process of said tool, the method executed by the electronic device (100, 200, 300) of claim 1, the method comprising:
- (S1) obtaining, by a reader device (10a, 10b, 10c) of said electronic device (100, 200, 300), comprising a processing circuitry (102a, 102b, 102c) operatively connected to the reader device (10a, 10b, 10c), information related to at least a first identification marker (41, 42) of the at least first cutting tool (20a, 20b, 20c, 20d);
- (S2) decoding the at least first cutting tool identification marker (41, 42) to determine at least first cutting tool identification data (1ctID, 2ctID);
- (S3) obtaining, by the reader device (10a, 10b, 10c), information related to at least a first carrier identification marker (43, 44) of at least a first carrier (30a, 30b) configured to carry the at least first cutting tool (20a, 20b, 20c, 20d) in the manufacturing process;
- (S4) decoding the at least first carrier identification marker (43, 44) to determine at least first carrier identification data (1cID, 2cID); and
- (S5) generating a first association data (1AD) indicative of the at least first cutting tool identification data (1ctID, 2ctID) and the at least first carrier identification data (1cID, 2cID);
- (S8) obtaining an image, of a camera configured to obtain images, of the at least first carrier (30a, 30b) and the at least first cutting tool (20a, 20b, 20c, 20d);
- (S9) determining, by image processing, at least a first position data (1PD, 2PD) of the at least first cutting tool (20a, 20b, 20c, 20d) in relation to the at least first carrier (30a, 30b), for determining the position of the at least first cutting tool (20a, 20b, 20c, 20d) on the at least first carrier (30a, 30b); and
- (S10) generating a second association data (2AD) indicative of the at least first cutting tool identification data (1ctID, 2ctID) and the at least first position data (1PD, 2PD); **characterized in that** the method further comprising
- (S14) obtaining an image, of the camera configured to obtain images, of the at least first carrier (30a, 30b) and at least a first process step device (60a, 60b) comprising at least a first placement location (1PL, 2PL, 3PL, 4PL) configured to receive the at least first carrier (30a, 30b);
- (S15) determining, by image processing, at least a first placement location data (1PLD, 2PLD, 3PLD, 4PLD) of the at least first carrier (30a, 30b) carrying the at least first cutting tool (20a, 20b, 20c, 20d) in relation to the at least first placement location (1PL, 2PL, 3PL, 4PL) where the at least first carrier (30a, 30b) is placed, for determining the placement of the at least first carrier (30a, 30b) in the at least first process step device (60a, 60b); and
- (S16) generating a fourth association data (4AD) indicative of the at least first cutting tool identification data (1ctID, 2ctID) and the at least first placement location data (1PLD, 2PLD, 3PLD, 4PLD).

7. The method according to claim 6, further comprising :
- (S11) obtaining an image, of the camera configured to obtain images, of the at least first carrier (30a, 30b) and the at least first cutting tool (20a, 20b, 20c, 20d);
- (S12) determining, by image processing, at least a first orientation data (1OD, 2OD) of the at least first cutting tool (20a, 20b, 20c, 20d) in relation to the at least first carrier (30a, 30b), for determining the orientation of the at least first cutting tool (20a, 20b, 20c, 20d) on the at least first carrier (30a, 30b); and
- (S13) generating a third association data (3AD) indicative of the at least first cutting tool identification data (1ctID, 2ctID) and the at least first orientation data (1OD, 20D).

8. The method according to claim 6 or 7, further comprising :
- (S17) obtaining at least a first process step identification data (1psID, 2psID); and
- (S18) generating a fifth association data (5AD) indicative of the at least first cutting tool identification data (1ctID, 2ctID) and the at least first process step identification data (1psID, 2psID).

9. The method according to any of the claims 6-8, further comprising :
- (S19) obtaining at least a first process step sensor data (1pssD, 2pssD); and
- (S20) generating a sixth association data (6AD) indicative of the at least first cutting tool identification data (1ctID, 2ctID) and the at least first process step sensor data (1pssD, 2pssD).

10. The method according to any of the claims 6-9, further comprising :
- storing the at least first association data (1AD, 2AD, 3AD, 4AD, 5AD, 6AD) in a memory (101a, 101b, 101c) operatively connected to the electronic device (100, 200, 300); and
- obtaining the at least first association data (1AD, 2AD, 3AD, 4AD, 5AD, 6AD) from the memory (101a, 101b, 101c) by obtaining, by the reader device (10a, 10b, 10c), information related to the at least first identification marker (41, 42) of the at least first cutting tool (20a, 20b, 20c, 20d) and decoding the at least first cutting tool identification marker (41, 42) to determine at least first cutting tool identification data (1ctID, 2ctID).

11. A computer program product (500) comprising a non-transitory computer readable medium, having thereon a computer program comprising program instructions, the computer program being loadable into the processing circuitry (102a, 102b, 102c) of an electronic device (100, 200, 300) according to claim 1 and configured to cause execution of the method according to any of claims 6-10 when the computer program is run by the processing circuitry (102a, 102b, 102c) of said electronic device (100, 200, 300) according to claim 1.

## Patentansprüche

1. Elektronische Vorrichtung (100, 200, 300) zur Handhabung der Rückverfolgbarkeit wenigstens eines ersten Schneidwerkzeugs (20a, 20b, 20c, 20d) in einem Herstellungsprozess des Werkzeugs, wobei die elektronische Vorrichtung (100, 200, 300) Folgendes aufweist:
• eine Lesevorrichtung (10a, 10b, 10c), die zum Lesen von Informationen konfiguriert ist,
• eine Prozessschaltung (102a, 102b, 102c), die betriebsmäßig mit der Lesevorrichtung (10a, 10b, 10c) verbunden ist und so konfiguriert ist, dass sie die elektronische Vorrichtung (100, 200, 300) zu Folgendem veranlasst,:
- Erhalten von Informationen durch die Lesevorrichtung (10a, 10b, 10c), die sich auf eine erste Schneidwerkzeug-Identifikationskennzeichnung (41, 42) des wenigstens ersten Schneidwerkzeugs (20a, 20b, 20c, 20d) beziehen,
- Dekodieren der wenigstens ersten Schneidwerkzeug-Identifikationskennzeichnung (41, 42), um wenigstens erste Schneidwerkzeug-Identifikationsdaten (1ctID, 2ctlD) zu bestimmen,
- Erhalten von Informationen durch die Lesevorrichtung (10a, 10b, 10c), die sich auf eine erste Träger-Identifikationskennzeichnung (43, 44) von wenigstens einem ersten Träger (30a, 30b) beziehen, der konfiguriert ist, um das wenigstens erste Schneidwerkzeug (20a, 20b, 20c, 20d) in dem Herstellungsprozess zu tragen,
- Dekodieren der wenigstens ersten Trägeridentifikationskennzeichnung (43, 44), um wenigstens erste Trägeridentifikationsdaten (1cID, 2cID) zu bestimmen, und
- Erzeugen erster Zuordnungsdaten (1AD), die die wenigstens ersten Schneidwerkzeug-Identifikationsdaten (1ctID, 2ctID) und die wenigstens ersten Träger-Identifikationsdaten (1cID, 2cID)anzeigen, wobei
die Lesevorrichtung (10a, 10b, 10c) eine Kamera ist, die so konfiguriert ist, dass sie Bilder erhält, oder wobei die elektronische Vorrichtung ferner eine Kamera aufweist, die so konfiguriert ist, dass sie Bilder erhält, und wobei die Prozessschaltung (102a, 102b, 102c) ferner so konfiguriert ist, dass sie die elektronische Vorrichtung (100, 200, 300) veranlasst:
- Erhalten eines Bildes des wenigstens ersten Trägers (30a, 30b) und des wenigstens ersten Schneidwerkzeugs (20a, 20b, 20c, 20d),
- Bestimmen wenigstens erster Positionsdaten (1PD, 2PD) des wenigstens ersten Schneidwerkzeugs (20a, 20b, 20c, 20d) in Bezug auf den wenigstens ersten Träger (30a, 30b) durch Bildverarbeitung, um die Position des wenigstens ersten Schneidwerkzeugs (20a, 20b, 20c, 20d) auf dem wenigstens ersten Träger (30a, 30b) zu bestimmen, und
- Erzeugen zweiter Zuordnungsdaten (2AD), die die wenigstens ersten Schneidwerkzeug-Identifikationsdaten (1ctID, 2ctlD) und die wenigstens ersten Positionsdaten (1PD, 2PD) anzeigen, **dadurch gekennzeichnet, dass**
die Prozessschaltung (102a, 102b, 102c) ferner so konfiguriert ist, dass sie die elektronische Vorrichtung (100, 200, 300) zu Folgendem veranlasst:
- Erhalten eines Bildes des wenigstens ersten Trägers (30a, 30b) und wenigstens einer ersten Prozessschrittvorrichtung (60a, 60b), die wenigstens einen ersten Platzierungsort (1PL, 2PL, 3PL, 4PL) aufweist, der konfiguriert ist, um den wenigstens ersten Träger (30a, 30b) aufzunehmen,
- Bestimmen durch Bildverarbeitung wenigstens eines ersten Platzierungsortes (1PLD, 2PLD, 3PLD, 4PLD) des wenigstens ersten Trägers (30a, 30b), der das wenigstens erste Schneidwerkzeug (20a, 20b, 20c, 20d) trägt, in Bezug auf den wenigstens ersten Platzierungsort (1PL, 2PL, 3PL, 4PL), an dem der wenigstens erste Träger (30a, 30b) platziert ist, zum Bestimmen der Platzierung des wenigstens ersten Trägers (30a, 30b) in der wenigstens ersten Prozessschrittvorrichtung (60a, 60b), und
- Erzeugen von vierten Zuordnungsdaten (4AD), die die wenigstens ersten Schneidwerkzeug-Identifikationsdaten (1ctID, 2ctlD) und die wenigstens ersten Platzierungsortdaten (1PLD, 2PLD, 3PLD, 4PLD) anzeigen.

2. Elektronische Vorrichtung (100, 200, 300) nach Anspruch 1, wobei die Prozessschaltung (102a, 102b, 102c) ferner so konfiguriert ist, dass sie die elektronische Vorrichtung (100, 200, 300) zu Folgendem veranlasst:
- Erhalten eines Bildes des wenigstens ersten Trägers (30a, 30b) und des wenigstens ersten Schneidwerkzeugs (20a, 20b, 20c, 20d),
- Bestimmen, durch Bildverarbeitung, von wenigstens ersten Orientierungsdaten (1OD, 2OD) des wenigstens ersten Schneidwerkzeugs (20a, 20b, 20c, 20d) in Bezug auf den wenigstens ersten Träger (30a, 30b), um die Orientierung des wenigstens ersten Schneidwerkzeugs (20a, 20b, 20c, 20d) auf dem wenigstens ersten Träger (30a, 30b) zu bestimmen, und
- Erzeugen dritter Zuordnungsdaten (3AD), die die wenigstens ersten Schneidwerkzeug-Identifikationsdaten (1ctID, 2ctlD) und die wenigstens ersten Orientierungsdaten (1OD, 2OD) anzeigen.

3. Elektronische Vorrichtung (100,200,300) nach einem der vorhergehenden Ansprüche, wobei die Prozessschaltung (102a, 102b, 102c) ferner so konfiguriert ist, dass sie die elektronische Vorrichtung (100, 200, 300) zu Folgendem veranlasst:
- Erhalten wenigstens erster Prozessschritt-Identifikationsdaten (1psID, 2psID) und
- Erzeugen von fünften Assoziationsdaten (5AD), die die wenigstens ersten Schneidwerkzeug-Identifikationsdaten (1ctID, 2ctlD) und die wenigstens ersten Prozessschritt-Identifikationsdaten (1psID, 2psID) anzeigen.

4. Elektronische Vorrichtung (100,200,300) nach einem der vorhergehenden Ansprüche, wobei die Prozessschaltung (102a, 102b, 102c) ferner so konfiguriert ist, dass sie die elektronische Vorrichtung (100, 200, 300) zu Folgendem veranlasst:
- Erhalten von wenigstens ersten Prozessschritt-Sensordaten (1pssD, 2pssD), und
- Erzeugen von sechsten Zuordnungsdaten (6AD), die die wenigstens ersten Schneidwerkzeug-Identifikationsdaten (1ctID, 2ctlD) und die wenigstens ersten Prozessschritt Prozessschritt-Sensordaten (1pssD, 2pssD) anzeigen.

5. Elektronische Vorrichtung (100,200,300) nach einem der vorhergehenden Ansprüche, wobei die Prozessschaltung (102a, 102b, 102c) ferner so konfiguriert ist, dass sie die elektronische Vorrichtung (100, 200, 300) zu Folgendem veranlasst:
- Speichern der wenigstens ersten Assoziationsdaten (1AD, 2AD, 3AD, 4AD, 5AD, 6AD) in einem Speicher (101a, 101b, 101c), der operativ mit der elektronischen Vorrichtung (100, 200, 300) verbunden ist, und
- Erhalten der wenigstens ersten Zuordnungsdaten (1AD, 2AD, 3AD, 4AD, 5AD, 6AD) aus dem Speicher (101a, 101b, 101c), indem durch die Lesevorrichtung (10a, 10b, 10c) Informationen in Bezug auf die wenigstens erste Identifikationskennzeichnung (41, 42) des wenigstens ersten Schneidwerkzeugs (20a, 20b, 20c, 20d) erhalten werden, und Dekodieren der wenigstens ersten Schneidwerkzeug-Identifikationskennzeichnung (41, 42), um zumindest erste Schneidwerkzeug-Identifikationsdaten (1ctID, 2ctlD) zu bestimmen.

6. Verfahren zur Handhabung der Rückverfolgbarkeit wenigstens eines ersten Schneidwerkzeugs (20a, 20b, 20c, 20d) in einem Herstellungsprozess des Werkzeugs, wobei das Verfahren von der elektronischen Vorrichtung (100, 200, 300) nach Anspruch 1 ausgeführt wird, wobei das Verfahren Folgendes umfasst:
- (S1) Erhalten von Informationen, die sich auf wenigstens eine erste Identifikationskennzeichnung (41, 42) des wenigstens ersten Schneidwerkzeugs (20a, 20b, 20c, 20d) beziehen, durch eine Lesevorrichtung (10a, 10b, 10c) der elektronischen Vorrichtung (100, 200, 300), die eine Prozessschaltung (102a, 102b, 102c) umfasst, die funktionell mit der Lesevorrichtung (10a, 10b, 10c) verbunden ist,
- (S2) Dekodieren der wenigstens ersten Schneidwerkzeug-Identifikationskennzeichnung (41, 42), um wenigstens erste Schneidwerkzeug-Identifikationsdaten (1ctID, 2ctlD) zu bestimmen,
- (S3) Erhalten, durch die Lesevorrichtung (10a, 10b, 10c), von Informationen, die sich auf wenigstens eine erste Träger-Identifikationskennzeichnung (43, 44) von wenigstens einem ersten Träger (30a, 30b) beziehen, der konfiguriert ist, um das wenigstens erste Schneidwerkzeug (20a, 20b, 20c, 20d) in dem Herstellungsprozess zu tragen,
- (S4) Dekodieren der wenigstens ersten Trägeridentifikationskennzeichnung (43, 44), um wenigstens erste Trägeridentifikationsdaten (1cID, 2cID) zu bestimmen, und
- (S5) Erzeugen erster Zuordnungsdaten (1AD), die die wenigstens ersten Schneidwerkzeug-Identifikationsdaten (1ctID, 2ctlD) und die wenigstens ersten Träger-Identifikationsdaten (1cID, 2cID) anzeigen,
- (S8) Erhalten eines Bildes von einer Kamera, die konfiguriert ist, um Bilder des wenigstens ersten Trägers (30a, 30b) und des wenigstens ersten Schneidwerkzeugs (20a, 20b, 20c, 20d) zu erhalten,
- (S9) Bestimmen von wenigstens ersten Positionsdaten (1PD, 2PD) des wenigstens ersten Schneidwerkzeugs (20a, 20b, 20c, 20d) in Bezug auf den wenigstens ersten Träger (30a, 30b) durch Bildverarbeitung, um die Position des wenigstens ersten Schneidwerkzeugs (20a, 20b, 20c, 20d) auf dem wenigstens ersten Träger (30a, 30b) zu bestimmen, und
- (S10) Erzeugen zweiter Zuordnungsdaten (2AD), die die wenigstens ersten Schneidwerkzeug-Identifikationsdaten (1ctID, 2ctlD) und die wenigstens ersten Positionsdaten (1PD, 2PD) anzeigen, **dadurch gekennzeichnet, dass** das Verfahren ferner Folgendes umfasst
- (S14) Erhalten eines Bildes der Kamera, die konfiguriert ist, um Bilder zu erhalten von dem wenigstens ersten Träger (30a, 30b) und wenigstens einer ersten Prozessschrittvorrichtung (60a, 60b), die wenigstens einen ersten Platzierungsort (1PL, 2PL, 3PL, 4PL) umfasst und die konfiguriert ist, um den wenigstens ersten Träger (30a, 30b) aufzunehmen;
- (S15) Bestimmen, durch Bildverarbeitung, wenigstens eines ersten Platzierungsortes (1PLD, 2PLD, 3PLD, 4PLD) des wenigstens ersten Trägers (30a, 30b), der das wenigstens erste Schneidwerkzeug (20a, 20b, 20c, 20d) in Bezug auf den wenigstens ersten Platzierungsort (1PL, 2PL, 3PL, 4PL), an dem der wenigstens erste Träger (30a, 30b) platziert ist, zum Bestimmen der Platzierung des wenigstens ersten Trägers (30a, 30b) in der wenigstens ersten Prozessschrittvorrichtung (60a, 60b), und
- (S16) Erzeugen von vierten Zuordnungsdaten (4AD), die die wenigstens ersten Schneidwerkzeug-Identifikationsdaten (1ctID, 2ctlD) und die wenigstens ersten Platzierungsortdaten (1PLD, 2PLD, 3PLD, 4PLD) anzeigen.

7. Verfahren nach Anspruch 6 ferner umfassend:
- (S11) Erhalten eines Bildes der Kamera, die konfiguriert ist, um Bilder von dem wenigstens ersten Träger (30a, 30b) und dem wenigstens ersten Schneidwerkzeug (20a, 20b, 20c, 20d) zu erhalten,
- (S12) Bestimmen, durch Bildverarbeitung, wenigstens erster Orientierungsdaten (1OD, 2OD) des wenigstens ersten Schneidwerkzeugs (20a, 20b, 20c, 20d) in Bezug auf den wenigstens ersten Träger (30a, 30b), um die Orientierung des wenigstens ersten Schneidwerkzeugs (20a, 20b, 20c, 20d) auf dem wenigstens ersten Träger (30a, 30b) zu bestimmen, und
- (S13) Erzeugen von dritten Zuordnungsdaten (3AD), die die wenigstens ersten Schneidwerkzeug-Identifikationsdaten (1ctID, 2ctlD) und die wenigstens ersten Orientierungsdaten (1OD, 2OD) anzeigen.

8. Verfahren nach Anspruch 6 oder 7 ferner umfassend:
- (S17) Erhalten von wenigstens einem ersten Prozessschritt-Identifikationsdaten (IpsID, 2psID) und
- (S18) Erzeugen von fünften Assoziationsdaten (SAD), die wenigstens die ersten Schneidwerkzeug-Identifikationsdaten (1ctID, 2ctlD) und die wenigstens ersten Prozessschritt-Identifikationsdaten (IpsID, 2psID) anzeigen.

9. Verfahren nach einem der Ansprüche 6 bis 8, ferner umfassend:
- (S19) Erhalten von wenigstens ersten Prozessschritt-Sensordaten (1pssD, 2pssD) und
- (S20) Erzeugen von sechsten Zuordnungsdaten (6AD), die die wenigstens ersten Schneidwerkzeug-Identifikationsdaten (1ctlD, 2ctlD) und die wenigstens ersten Prozessschritt-Sensordaten (1pssD, 2pssD) anzeigen.

10. Verfahren nach einem der Ansprüche 6 bis 9, ferner umfassend:
- Speichern der wenigstens ersten Assoziationsdaten (1AD, 2AD, 3AD, 4AD, 5AD, 6AD) in einem Speicher (101a, 101b, 101c), der operativ mit der elektronischen Vorrichtung (100, 200, 300) verbunden ist, und
- Erhalten der wenigstens ersten Zuordnungsdaten (1AD, 2AD, 3AD, 4AD, 5AD, 6AD) aus dem Speicher (101a, 101b, 101c) durch Erhalten, durch die Lesevorrichtung (10a, 10b, 10c), von Informationen in Bezug auf die wenigstens erste Identifikationskennzeichnung (41, 42) des wenigstens ersten Schneidwerkzeugs (20a, 20b, 20c, 20d) und Dekodieren der wenigstens ersten Schneidwerkzeug-Identifikationskennzeichnung (41, 42), um zumindest die ersten Schneidwerkzeug-Identifikationsdaten (1ctID, 2ctlD) zu bestimmen.

11. Computerprogrammprodukt (500), das ein nicht-transitorisches computerlesbares Medium umfasst, auf dem sich ein Computerprogramm befindet, das Programmbefehle enthält, wobei das Computerprogramm in die Prozessschaltung (102a, 102b, 102c) einer elektronischen Vorrichtung (100, 200, 300) nach Anspruch 1 geladen werden kann und so konfiguriert ist, dass es die Ausführung des Verfahrens nach einem der Ansprüche 6 bis 10 bewirkt, wenn das Computerprogramm von der Prozessschaltung (102a, 102b, 102c) der elektronischen Vorrichtung (100, 200, 300) ausgeführt wird.

## Revendications

1. Dispositif électronique (100, 200, 300) de gestion de la traçabilité d'au moins un premier outil de coupe (20a, 20b, 20c, 20d) lors d'un processus de fabrication dudit outil, le dispositif électronique (100, 200, 300) comprend :
• un dispositif de lecteur (10a, 10b, 10c) configuré pour lire des informations ;
• un circuit de traitement (102a, 102b, 102c) relié de manière fonctionnelle au dispositif de lecteur (10a, 10b, 10c) configuré pour amener le dispositif électronique (100, 200, 300) à :
- obtenir, par le dispositif de lecteur (10a, 10b, 10c), des informations relatives à un marqueur d'identification de premier outil de coupe (41, 42) du au moins un premier outil de coupe (20a, 20b, 20c, 20d) ;
- décoder le marqueur d'identification d'au moins un premier outil de coupe (41, 42) pour déterminer des données d'identification d'au moins un premier outil de coupe (1ctID, 2ctID) ;
- obtenir, par le dispositif de lecteur (10a, 10b, 10c), des informations relatives à un marqueur d'identification de premier support (43, 44) d'au moins un premier support (30a, 30b) configuré pour supporter le au moins un premier outil de coupe (20a, 20b, 20c, 20d) lors du processus de fabrication ;
- décoder le marqueur d'identification d'au moins un premier support (43, 44) pour déterminer des données d'identification d'au moins un premier support (1cID, 2cID) ; et
- générer des données de première association (1AD) représentatives des données d'identification d'au moins un premier outil de coupe (1ctID, 2ctID) et des données d'identification d'au moins un premier support (1cID, 2cID) ; où
le dispositif de lecteur (10a, 10b, 10c) est un appareil de prise de vues configuré pour obtenir des images, ou où le dispositif électronique comprend en outre un appareil de prise de vues configuré pour obtenir des images, et le circuit de traitement (102a, 102b, 102c) est en outre configuré pour amener le dispositif électronique (100, 200, 300) à :
- obtenir une image du au moins un premier support (30a, 30b) et du au moins un premier outil de coupe (20a, 20b, 20c, 20d) ;
- déterminer, par un traitement d'image, des données d'au moins une première position (1PD, 2PD) du au moins un premier outil de coupe (20a, 20b, 20c, 20d) par rapport au au moins un premier support (30a, 30b), afin de déterminer la position du au moins un premier outil de coupe (20a, 20b, 20c, 20d) sur le au moins un premier support (30a, 30b) ; et
- générer des données de seconde association (2AD) représentatives des données d'identification d'au moins un premier outil de coupe (1ctID, 2ctID) et des données d'au moins une première position (1PD, 2PD) ; **caractérisé en ce que**
le circuit de traitement (102a, 102b, 102c) est en outre configuré pour amener le dispositif électronique (100, 200, 300) à :
- obtenir une image du au moins un premier support (30a, 30b) et d'au moins un premier dispositif d'étape de processus (60a, 60b) comprenant au moins un premier emplacement de positionnement (1PL, 2PL, 3PL, 4PL) configuré pour recevoir le au moins un premier support (30a, 30b) ;
- déterminer, par un traitement d'image, des données d'au moins un premier emplacement de positionnement (1PLD, 2PLD, 3PLD, 4PLD) du au moins un premier support (30a, 30b) supportant le au moins un premier outil de coupe (20a, 20b, 20c, 20d) par rapport au au moins un premier emplacement de positionnement (1PL, 2PL, 3PL, 4PL) où est positionné le au moins un premier support (30a, 30b), afin de déterminer le positionnement du au moins un premier support (30a, 30b) dans le au moins un premier dispositif d'étape de processus (60a, 60b) ; et
- générer des données de quatrième association (4AD) représentatives des données d'identification d'au moins un premier outil de coupe (1ctID, 2ctID) et des données d'au moins un premier emplacement de positionnement (1PLD, 2PLD, 3PLD, 4PLD).

2. Dispositif électronique (100, 200, 300) selon la revendication 1, dans lequel le circuit de traitement (102a, 102b, 102c) est en outre configuré pour amener le dispositif électronique (100, 200, 300) à :
- obtenir une image du au moins un premier support (30a, 30b) et du au moins un premier outil de coupe (20a, 20b, 20c, 20d) ;
- déterminer, par un traitement d'image, des données d'au moins une première orientation (1OD, 2OD) du au moins un premier outil de coupe (20a, 20b, 20c, 20d) par rapport au au moins un premier support (30a, 30b), afin de déterminer l'orientation du au moins un premier outil de coupe (20a, 20b, 20c, 20d) sur le au moins un premier support (30a, 30b) ; et
- générer des données de troisième association (3AD) représentatives des données d'identification d'au moins un premier outil de coupe (1ctID, 2ctID) et des données d'au moins une première orientation (1OD, 20D).

3. Dispositif électronique (100, 200, 300) selon l'une quelconque des revendications précédentes, dans lequel le circuit de traitement (102a, 102b, 102c) est en outre configuré pour amener le dispositif électronique (100, 200, 300) à :
- obtenir des données d'identification d'au moins une première étape de processus (1psID, 2psID) ; et
- générer des données de cinquième association (5AD) représentatives des données d'identification d'au moins un premier outil de coupe (1ctID, 2ctID) et des données d'identification d'au moins une première étape de processus (1psID, 2psID).

4. Dispositif électronique (100, 200, 300) selon l'une quelconque des revendications précédentes, dans lequel le circuit de traitement (102a, 102b, 102c) est en outre configuré pour amener le dispositif électronique (100, 200, 300) à :
- obtenir des données de capteur d'au moins une première étape de processus (1pssD, 2pssD) ; et
- générer des données de sixième association (6AD) représentatives des données d'identification d'au moins un premier outil de coupe (1ctID, 2ctID) et des données de capteur d'au moins une première étape de processus (1pssD, 2pssD).

5. Dispositif électronique (100, 200, 300) selon l'une quelconque des revendications précédentes, dans lequel le circuit de traitement (102a, 102b, 102c) est en outre configuré pour amener le dispositif électronique (100, 200, 300) à :
- mémoriser des données d'au moins une première association (1AD, 2AD, 3AD, 4AD, 5AD, 6AD) dans une mémoire (101a, 101b, 101c) reliée de manière fonctionnelle au dispositif électronique (100, 200, 300) ; et
- obtenir des données d'au moins une première association (1AD, 2AD, 3AD, 4AD, 5AD, 6AD) à partir de la mémoire (101a, 101b, 101c) en obtenant, par le dispositif de lecteur (10a, 10b, 10c), des informations relatives au au moins un premier marqueur d'identification (41, 42) du au moins un premier outil de coupe (20a, 20b, 20c, 20d) et en décodant le marqueur d'identification d'au moins un premier outil de coupe (41, 42) pour déterminer des données d'identification d'au moins un premier outil de coupe (1ctID, 2ctID).

6. Procédé de gestion de la traçabilité d'au moins un premier outil de coupe (20a, 20b, 20c, 20d) lors d'un processus de fabrication dudit outil, le procédé étant exécuté par le dispositif électronique (100, 200, 300) selon la revendication 1, le procédé comprenant les étapes consistant à :
- obtenir (S1), par un dispositif de lecteur (10a, 10b, 10c) dudit dispositif électronique (100, 200, 300), comprenant un circuit de traitement (102a, 102b, 102c) relié de manière fonctionnelle au dispositif de lecteur (10a, 10b, 10c), des informations relatives à au moins un premier marqueur d'identification (41, 42) du au moins un premier outil de coupe (20a, 20b, 20c, 20d) ;
- décoder (S2) le marqueur d'identification d'au moins un premier outil de coupe (41, 42) pour déterminer des données d'identification d'au moins un premier outil de coupe (1ctID, 2ctID) ;
- obtenir (S3), par le dispositif de lecteur (10a, 10b, 10c), des informations relatives à un marqueur d'identification d'au moins un premier support (43, 44) d'au moins un premier support (30a, 30b) configuré pour supporter le au moins un premier outil de coupe (20a, 20b, 20c, 20d) lors du processus de fabrication ;
- décoder (S4) le marqueur d'identification d'au moins un premier support (43, 44) pour déterminer des données d'identification d'au moins un premier support (1cID, 2cID) ; et
- générer (S5) des données de première association (1AD) représentatives des données d'identification d'au moins un premier outil de coupe (1ctID, 2ctID) et des données d'identification d'au moins un premier support (1cID, 2cID) ;
- obtenir (S8) une image, d'un appareil de prise de vues configuré pour obtenir des images, du au moins un premier support (30a, 30b) et du au moins un premier outil de coupe (20a, 20b, 20c, 20d) ;
- déterminer (S9), par un traitement d'image, des données d'au moins une première position (1PD, 2PD) du au moins un premier outil de coupe (20a, 20b, 20c, 20d) par rapport au au moins un premier support (30a, 30b), afin de déterminer la position du au moins un premier outil de coupe (20a, 20b, 20c, 20d) sur le au moins un premier support (30a, 30b) ; et
- générer (S10) des données de seconde association (2AD) représentatives des données d'identification d'au moins un premier outil de coupe (1ctID, 2ctID) et des données d'au moins une première position (1PD, 2PD) ; **caractérisé en ce que** le procédé comprend en outre les étapes consistant à
- obtenir (S 14) une image, de l'appareil de prise de vues configuré pour obtenir des images, du au moins un premier support (30a, 30b) et d'au moins un premier dispositif d'étape de processus (60a, 60b) comprenant au moins un premier emplacement de positionnement (1PL, 2PL, 3PL, 4PL) configuré pour recevoir le au moins un premier support (30a, 30b) ;
- déterminer (S15), par un traitement d'image, des données d'au moins un premier emplacement de positionnement (1PLD, 2PLD, 3PLD, 4PLD) du au moins un premier support (30a, 30b) supportant le au moins un premier outil de coupe (20a, 20b, 20c, 20d) par rapport au au moins un premier emplacement de positionnement (1PL, 2PL, 3PL, 4PL) où est positionné le au moins un premier support (30a, 30b), afin de déterminer le positionnement du au moins un premier support (30a, 30b) dans le au moins un premier dispositif d'étape de processus (60a, 60b) ; et
- générer (S16) des données de quatrième association (4AD) représentatives des données d'identification d'au moins un premier outil de coupe (1ctID, 2ctID) et des données d'au moins un premier emplacement de positionnement (1PLD, 2PLD, 3PLD, 4PLD).

7. Procédé selon la revendication 6, comprenant en outre les étapes consistant à :
- obtenir (S11) une image, de l'appareil de prise de vues configuré pour obtenir des images, du au moins un premier support (30a, 30b) et du au moins un premier outil de coupe (20a, 20b, 20c, 20d) ;
- déterminer (S12), par un traitement d'image, des données d'au moins une première orientation (1OD, 2OD) du au moins un premier outil de coupe (20a, 20b, 20c, 20d) par rapport au au moins un premier support (30a, 30b), afin de déterminer l'orientation du au moins un premier outil de coupe (20a, 20b, 20c, 20d) sur le au moins un premier support (30a, 30b) ; et
- générer (S13) des données de troisième association (3AD) représentatives des données d'identification d'au moins un premier outil de coupe (1ctID, 2ctID) et des données d'au moins une première orientation (1OD, 20D).

8. Procédé selon la revendication 6 ou 7, comprenant en outre les étapes consistant à :
- obtenir (S17) des données d'identification d'au moins une première étape de processus (1psID, 2psID) ; et
- générer (S18) des données de cinquième association (5AD) représentatives des données d'identification d'au moins un premier outil de coupe (1ctID, 2ctID) et des données d'identification d'au moins une première étape de processus (1psID, 2psID).

9. Procédé selon l'une quelconque des revendications 6 à 8, comprenant en outre les étapes consistant à :
- obtenir (S19) des données de capteur d'au moins une première étape de processus (1pssD, 2pssD) ; et
- générer (S20) des données de sixième association (6AD) représentatives des données d'identification d'au moins un premier outil de coupe (1ctID, 2ctID) et des données de capteur d'au moins une première étape de processus (1pssD, 2pssD).

10. Procédé selon l'une quelconque des revendications 6 à 9, comprenant en outre les étapes consistant à :
- mémoriser des données d'au moins une première association (1AD, 2AD, 3AD, 4AD, 5AD, 6AD) dans une mémoire (101a, 101b, 101c) reliée de manière fonctionnelle au dispositif électronique (100, 200, 300) ; et
- obtenir des données d'au moins une première association (1AD, 2AD, 3AD, 4AD, 5AD, 6AD) à partir de la mémoire (101a, 101b, 101c) en obtenant, par le dispositif de lecteur (10a, 10b, 10c), des informations relatives au au moins un premier marqueur d'identification (41, 42) du au moins un premier outil de coupe (20a, 20b, 20c, 20d) et en décodant le marqueur d'identification d'au moins un premier outil de coupe (41, 42) pour déterminer des données d'identification d'au moins un premier outil de coupe (1ctID, 2ctID).

11. Produit de programme informatique (500) comprenant un support lisible par ordinateur non transitoire, ayant sur celui-ci un programme informatique comprenant des instructions de programme, le programme informatique étant chargeable dans le circuit de traitement (102a, 102b, 102c) d'un dispositif électronique (100, 200, 300) selon la revendication 1 et configuré pour déclencher une exécution du procédé selon l'une quelconque des revendications 6 à 10 lorsque le programme informatique est exécuté par le circuit de traitement (102a, 102b, 102c) dudit dispositif électronique (100, 200, 300) selon la revendication 1.
